Europäisches Patentamt

European Patent Office

Office européen des brevets

(11) Numéro de publication: **0 422 999 A1**

## DEMANDE DE BREVET EUROPEEN

(21) Numéro de dépôt: 90402761.2

(22) Date de dépôt: **05.10.90**

(51) Int. Cl.5: **B01D 53/36, C01B 17/04**

(30) Priorité: **09.10.89 FR 8913141**

(43) Date de publication de la demande:
**17.04.91 Bulletin 91/16**

(84) Etats contractants désignés:
**AT BE CH DE DK ES FR GB IT LI NL SE**

(71) Demandeur: **RHONE POULENC CHIMIE**
**25 Quai Paul Doumer**
**F-92408 Courbevoie Cédex(FR)**

(72) Inventeur: **Chopin, Thierry**
**44, rue Auguste Poullain, Résidence Clos du**
**Lendit**
**F-93200 Saint Denis(FR)**
Inventeur: **Hebrard, Jean-Luc**
**31, rue Dauphine**
**F-75006 Paris(FR)**
Inventeur: **Quemere, Eric**
**11 bis rue du Martray**
**F-95240 Cormeilles/En/Parisis(FR)**

(74) Mandataire: **Dubruc, Philippe et al**
**RHONE-POULENC CHIMIE Service Brevets**
**Chimie 25, quai Paul-Doumer**
**F-92408 Courbevoie Cédex(FR)**

(54) Catalyseurs pour le traitement des effluents gazeux et procédé de traitement de ces effluents.

(57) La présente invention concerne des catalyseurs pour le traitement de gaz contenant des composés soufrés.
Ces catalyseurs qui comprennent comme composé essentiel, un élément catalytiquement actif pour la réaction d'oxydation de l'hydrogène sulfuré en soufre ont une forme monolithique. Cette forme permet d'améliorer l'activité et la sélectivité en soufre de la réaction d'oxydation directe de l'hydrogène sulfure.

# CATALYSEURS POUR LE TRAITEMENT DES EFFLUENTS GAZEUX ET PROCEDE DE TRAITEMENT DE CES EFFLUENTS

La présente invention concerne des catalyseurs pour le traitement de gaz, notamment des effluents gazeux industriels, contenant des composés soufrés, en vue de la transformation catalytique de ces composés soufrés en composés facilement éliminables.

Elle concerne plus particulièrement des catalyseurs pour l'oxydation directe en soufre de l'hydrogène sulfureux, ou des composés carbonés du soufre.

Certains effluents industriels et en particulier les effluents provenant des unités Claus, appelés également "gaz de queue", contiennent du soufre et/ou des composés polluants oxydables du soufre qui doivent être traités pour être transformés par oxydation en composés aisément éliminables comme l'anhydride sulfureux et/ou l'anhydride sulfurique.

Les composés du soufre notamment présents dans ces effluents sont principalement l'hydrogène sulfuré et des composés organiques du soufre tels que le sulfure de carbone, l'oxysulfure de carbone et/ou des mercaptans.

Ces effluents peuvent être également traités pour transformer les composés du soufre en soufre élémentaire, par oxydation directe, le soufre élémentaire étant aisément éliminable ou récupérable, par exemple, par condensation.

Plusieurs procédés d'oxydation de ces composés sont déjà connus. Le plus simple de ces procédés consiste à brûler à hautes températures les effluents.

Toutefois, quand la teneur en hydrogène sulfuré est trop basse, il est difficile de maintenir une température de flamme suffisante pour obtenir une combustion stable des composés soufrés.

Pour traiter ces gaz à concentration basse en hydrogène sulfuré, il a été proposé des procédés catalytiques d'oxydation des composés soufrés en S, $SO_2$ ou $SO_3$.

Parmi les catalyseurs proposés, les catalyseurs à base d'oxyde de titane apparaissent très performants. A titre d'exemple, on peut citer les brevets européens 115449, 60742, 78690 qui décrivent différents catalyseurs à base d'oxyde de titane utilisés dans l'oxydation de l'hydrogène sulfuré.

D'autres catalyseurs ont egalement été proposés. Ainsi, le brevet US n° 4092404 décrit un catalyseur d'oxydation à base de vanadium, le brevet européen n° 39266, un catalyseur à base de fer. Ces catalyseurs sont généralement utilisés sous forme de lit constitué par un ensemble de particules disposé dans une colonne, ce lit étant traversé par le flux du gaz à traiter.

Les lits de catalyseur sont constitués, jusqu'à présent, de particules de catalyseur sous forme de granulés cylindriques ou sphériques formés par moulage ou extrusion. Toutefois, de tels catalyseurs ne présentant pas une activité initiale élevée, à faible temps de contact, il est nécessaire de travailler à des temps de contact supérieurs ou égaux à 3 secondes environ. Il s'en suit une baisse de la sélectivité de la réaction d'oxydation directe de l'hydrogène sulfuré en soufre (réaction 1) due à la réaction inverse (réaction 2) dénommée, réaction de CLAUS inverse :

(1) $\quad H_2S + \frac{1}{2}O_2 \rightarrow \frac{1}{n}n + H_2O$

(2) $\quad \frac{3}{n}S_n + 2H_2O \rightleftharpoons 2H_2S + SO_2$

La présente invention a notamment pour but de remédier à cet inconvénient en proposant la mise en oeuvre pour la réaction d'oxydation directe de l'hydrogène sulfuré en soufre, un catalyseur de forme monolithique.

La demanderesse a trouvé d'une manière inattendue que le catalyseur de forme monolithique permettait une meilleure sélectivité du catalyseur vis-à-vis de la réaction d'oxydation directe de l'hydrogène sulfuré par rapport à la réaction de CLAUS inverse.

A cet effet, l'invention propose un catalyseur pour le traitement de gaz contenant des composés soufrés en vue de l'oxydation de ces composés en composés soufrés aisément éliminables et notamment en soufre élémentaire, comprenant comme composant essentiel un élément catalyseur de la réaction d'oxydation de ces composés soufrés, caractérisé en ce que ledit catalyseur a une forme monolithique.

Par forme monolithique, on entend un catalyseur présentant une structure du type alvéolaire ou en nids d'abeilles comprenant un certain nombre d'hexagones, de carrés, de triangles ou d'autres polygones ou cercles ou une forme en onde sinusoïdale, en toile d'araignée ou de spirale. Un tel catalyseur de type alvéolaire comprend des vides ou des pores d'une porosité d'environ 50 à environ 70 %.

Généralement, la forme du catalyseur est une forme cylindrique ou parallélépipédique percée sur toute sa longueur d'orifices parallèles à sa génératrice, permettant ainsi le passage des gaz dans les canaux ou conduits.

Un premier mode de réalisation de l'invention réside dans un catalyseur dit massique, c'est-à-dire que la phase catalytiquement active est extrudée sous forme monolithique.

Une autre variante d'exécution de l'invention consiste en un catalyseur supporté, c'est-à-dire la phase catalytiquement active est déposée sur support monolithique qui est donc un substrat rigide présentant une structure de type alvéolaire.

Le catalyseur de l'invention comprend comme composant essentiel un élément catalytiquement actif choisi dans le groupe comprenant l'oxyde d'aluminium, l'oxyde de titane, l'oxyde de cérium, l'oxyde de zirconium, l'oxyde de fer, l'oxyde de zinc, l'oxyde de chrome, l'oxyde de molybdène, l'oxyde de cobalt, l'oxyde de nickel, l'oxyde de vanadium ou un mélange de ceux-ci.

A titre d'exemple, l'oxyde de titane peut être utilisé seul ou en mélange avec plusieurs oxydes tels que l'alumine, la silice, l'oxyde de zirconium, l'oxyde de cérium, l'oxyde d'étain, les oxydes de terres rares trivalents, l'oxyde de molybdène, l'oxyde de cobalt, l'oxyde de nickel, l'oxyde de fer, l'oxyde de chrome, l'oxyde de zinc, l'oxyde de vanadium ou analogues. Il en est de même pour l'oxyde de cérium, l'oxyde de zirconium, l'alumine et pour les autres oxydes précités comme éléments catalytiquement actifs.

Les oxydes d'éléments catalytiquement actifs décrits ci-dessus convenables pour l'invention sont tous les oxydes de ces éléments quel que soit leur mode de préparation ou leur origine.

La proportion pondérale de l'élément catalytiquement actif par rapport au poids total du catalyseur fini peut varier de 0,5 à 100 %, et de préférence de 60 à 99 % environ.

Le catalyseur de l'invention peut également comprendre des additifs pour faciliter la mise en forme et des additifs pour améliorer les propriétés mécaniques finales.

On peut faire appel dans la préparation du catalyseur de l'invention, aux additifs utilisés classiquement dans les techniques de mise en forme. Ces additifs confèrent à la pâte obtenue par malaxage les propriétés rhéologiques adaptées à la mise en forme. A titre d'exemple d'additifs de mise en forme, on peut citer notamment : la cellulose, la carboxyméthyl-cellulose, la carboxyéthyl-cellulose, du tail-oil, les gommes xanthane, des agents tensio-actifs, des agents floculants comme les polyacrylamides, le noir de carbone, les amidons, l'acide stéarique, l'alcool polyacrylique, l'alcool polyvinylique, des biopolymères, le glucose, les polyéthylène glycol...

Enfin, la quantité de ces additifs peut varier entre 0,1 et 15 % en poids par rapport au catalyseur fini.

De plus, il est possible de mettre en oeuvre des constituants complémentaires susceptibles d'améliorer les qualités mécaniques des formulations. Ces constituants pourront être choisis dans le groupe comprenant les argiles, les silicates, les sulfates d'alcalino-terreux, les fibres céramiques, l'amiante ou la silice.

Avantageusement, le catalyseur comprend un sulfate d'alcalino-terreux, de préférence de calcium ou un sulfate d'ammonium.

Ces constituants peuvent être utilisés dans des quantités en poids par rapport au catalyseur fini pouvant aller jusqu'à 99,5 %, particulièrement jusqu'à 60 % et plus précisément jusqu'à 30 %.

Le catalyseur dit massique selon l'invention peut être préparé selon tout procédé connu approprié pour obtenir un monolithe massique.

Ce dernier peut être obtenu par mise en forme d'un mélange contenant les constituants du catalyseur.

On effectue un malaxage d'un mélange à base d'eau, de poudre contenant au moins un élément catalytiquement actif et les éventuels additifs du type mentionné ci-dessus.

Le mélange ainsi obtenu est ensuite mis sous forme monolithique selon les procédés classiques de fabrication par extrusion, laminage, solidification d'éléments en forme de feuille, etc...

On peut soumettre le monolithe ainsi obtenu à une opération de séchage à une température comprise, par exemple, entre 100° C et 150° C, pendant une durée très variable de 10 à 20 heures.

Elle peut être suivie éventuellement d'une opération de calcination à une température variant entre environ 350° C et environ 500° C, pendant une durée le plus souvent comprise entre 1 heure et 8 heures.

Les catalyseurs dits massiques de forme monolithique présentent généralement une surface spécifique variant de 5 à 300 m$^2$/g, de préférence entre 50 et 120 m$^2$/g. La surface spécifique exprimée est une surface B.E.T., c'est-à-dire déterminée par adsorption d'azote conformément à la norme ASTM : D 3663-76, établie à partir de la méthode BRUNAUER-EMMETT-TELLER - The Journal of Americain Society, 60 , 309 (1938).

Selon un autre mode de réalisation de l'invention, l'élément catalytiquement actif est déposé sur un support monolithique.

Le support monolithique peut être un support à propriétés non basiques tel que l'alumine, la silice, l'oxyde de cérium, l'oxyde de zirconium, l'oxyde de titane, etc...

Il peut être préparé et façonné comme décrit ci-dessus à partir de la poudre d'oxyde ou d'oxyde hydraté et éventuellement d'additifs de mise en forme et constituants supplémentaires, améliorant les qualités mécaniques tels que décrits précédemment.

Conviennent également comme supports monolithiques, les supports monolithiques de type connu, tels que les supports monolithiques réfractaires, par exemple, les monolithes métalliques ou les monolithes en matière céramique.

Les monolithes métalliques utilisés sont notamment ceux obtenus à partir d'alliages de chrome, aluminium et cobalt tels que ceux connus sous la marque KANTHAL ou ceux obtenus à partir d'alliages de fer, de chrome, d'aluminium et d'yttrium et connus sous la marque FECRALLOY. Le métal peut aussi être de l'acier carboné ou de la fonte simple.

Les monolithes en matière céramique utilisés sont notamment ceux comportant comme matière principale : la cordiérite, l'alumine, la mullite, le zirconium, la zirconmullite, le titanate de baryum, la porcelaine, l'oxyde de thorium, l'oxyde de magnésium, la stéatite, les carbures de bore ou de silicium.

Les différents supports monolithiques tels que précités peuvent être alors ensuite imprégnés de manière à effectuer le dépôt de l'élément catalytiquement actif.

L'imprégnation se fait de manière connue par mise en contact du support avec une solution, un sol, un gel comprenant au moins un élément catalytiquement actif sous forme d'oxyde ou de précurseur d'oxyde.

L'opération est effectuée généralement par trempage du support de structure monolithique dans un volume déterminé de solution d'au moins un précurseur d'un élément catalytiquement actif.

Par solution d'un précurseur d'un élément catalytiquement actif, on entend une solution d'un sel ou composé de l'élément ou d'au moins un des éléments constituant la phase catalytique, ces sels et composés étant thermiquement décomposables.

La concentration en sel de la solution est choisie en fonction de la quantité de phase active à déposer sur le support monolithique.

La surface d' imprégnation de la phase active est déterminée par le volume de solution adsorbé. Ainsi, selon une caractéristique de l'invention, le volume adsorbé de la phase catalytique est égal au volume poreux total du support monolithique à imprégner. Pour la détermination du volume poreux, on peut le faire selon la méthode connue au porosimètre à mercure ou bien mesurer sur un échantillon, la quantité d'eau qu'il absorbe. Il est également possible d'imprégner le support par trempage de celui dans la solution de précurseur(s) d'élément(s) catalytiquement actifs et d'éliminer l'excès de solution par égouttage.

Le support monolithique peut être alors soumis à une opération de séchage et éventuellement de calcination dans les conditions mentionnées précédemment.

Il est également possible de répéter ces opérations avec le même support après l'avoir séché et calciné et de déposer successivement plusieurs éléments sur le support et sur des surfaces déterminées, qui peuvent varier.

Le support monolithique est donc recouvert d'une couche d'une phase catalytiquement active dont l'épaisseur peut varier entre 2 $\mu$m et 500 $\mu$m et qui représente de 0,5 à 95 % du poids du support monolithique et fournit une surface spécifique généralement comprise entre 50 et 120 m$^2$/g.

Conformément à l'invention, le procédé d'oxydation de l'hydrogène sulfuré et des composés soufrés consiste à mettre en contact ledit effluent gazeux et un gaz renfermant de l'oxygène, en présence du catalyseur de forme monolithique.

On peut, selon le procédé de l'invention, mettre en oeuvre un eff luent gazeux qui peut avoir des origines diverses. En particulier, il peut être constitué par un gaz naturel, un gaz provenant de la gazéification du charbon ou des huiles lourdes, ou encore un gaz obtenu par hydrogénation des composés soufrés d'un effluent d'usine à soufre.

L'effluent gazeux contenant les composés soufrés présente une composition qui peut varier tant dans la nature de ses constituants que par leurs proportions. C'et ainsi qu'il contient de l'hydrogène sulfuré, mais éventuellement d'autres composés organiques du soufre tels que le sulfure de carbone (CS$_2$) et/ou l'oxysulfure de carbone (COS) et/ou des mercaptans.

L'effluent gazeux à traiter présente une composition variable dans de larges limites. Généralement, l'effluent contient moins de 15 % en volume d'hydrogène sulfuré et, de préférence, de 0,1 à 10 % en volume. Il peut comprendre également du CS$_2$ et/ou du COS dont la concentration globale est d'au plus 3 % en volume, de préférence d'au plus 1 %.

Pour ce qui est du gaz utilisé pour l'oxydation de l'hydrogène sulfuré, c'est généralement de l'air, éventuellement de l'air enrichi en oxygène, de l'oxygène pur ou des mélanges en proportions variées d'oxygène et d'un gaz inerte, par exemple, l'azote.

La quantité de gaz est telle que la quantité d'oxygène soit au moins égale et de préférence supérieure à la quantité stoechiométrique nécessaire pour l'oxydation en soufre de la totalité des composés soufrés. Avantageusement, la quantité d'oxygène présente dans le gaz représente un excès d'environ 15 à 100 % par rapport à la stoechiométrie.

Le procédé de désulfuration de l'invention est mis en oeuvre à des températures supérieures à 150°C et de préférence à des températures comprises entre 200°C et 550°C.

Le temps de contact du flux gazeux avec le catalyseur de l'invention est déterminé de telle sorte que l'on obtienne le taux de conversion souhaité.

Conformément au procédé de l'invention, le temps de contact est faible, de préférence entre 0,5 et 2,5 secondes, ce qui correspond à une vitesse spatiale élevée. La VVH qui représente le volume de gaz traité par volume de catalyseur et par heure est de préférence supérieure à 1500 $h^{-1}$, et encore plus préférentiellement comprise entre 2000 et 10.000 $h^{-1}$.

L'effluent gazeux contenant les composés soufrés et le gaz renfermant de l'oxygène libre peuvent être amenés séparément au contact du catalyseur. Toutefois, en vue d'obtenir un milieu réactionnel gazeux très homogène, il est préférable de mélanger tout d'abord ledit effluent avec le gaz renfermant de l'oxygène libre et d'amener le mélange ainsi réalisé au contact du catalyseur de l'invention.

Le mélange obtenu dénommé par la suite "flux gazeux" présente une composition très variable et l'on précisera, à titre d'exemples, les proportions des différents constituants, dans un mode de réalisation préférentiel de l'invention :
- hydrogène sulfuré = 0,1 à 3 %
- oxygène = 0,05 à 2 %
- eau = 3 à 30 %
- azote = quantité suffisante à 100 %

Un mode de mise en oeuvre préférentielle du procédé de l'invention consiste à mettre en contact un effluent gazeux ayant une teneur en $H_2S$ potentiel inférieur à 5 % ($H_2S$ libre + $H_2S$ provenant de $CS_2$ et COS) et un gaz contenant de l'oxygène : le rapport molaire $H_2S/O_2$ étant compris entre 1,0 et 2,3, et, de préférence, entre 1,3 et 1,8 avec un catalyseur de forme monolithique. On choisit, à titre préférentiel, un catalyseur dit massique d'oxyde de titane extrudé sous forme monolithique.

Le flux gazeux qui est issu de l'étape catalytique peut être traité pour condenser et séparer le soufre d'une manière connue.

Le procédé de l'invention permet d'obtenir un flux contenant très peu de $SO_2$, de préférence moins de 50 PPM.

Le catalyseur sous forme monolithique permet donc une meilleure sélectivité vis-à-vis de la réaction d'oxydation directe d'hydrogène sulfuré par rapport à la réaction de CLAUS inverse qui conduit à la formation de $SO_2$.

On donne, ci-après un exemple de mise en oeuvre de l'invention (exemple 2) et un exemple donné à titre comparatif (exemple 1).

Exemple comparatif 1 :

On ajoute à une suspension d'oxyde de titane obtenue après hydrolyse et filtration dans le procédé classique d'attaque sulfurique de l'ilménite, une suspension de chaux pour neutraliser la totalité des sulfates. La suspension est séchée à 150° C pendant 1 heure. La poudre obtenue est malaxée en présence d'eau et d'acide nitrique dans les proportions suivantes :
- poudre $TiO_2$ : 58 %
- $HNO_3$ : 2 %
- $H_2O$ : 40 %

La pâte ainsi obtenue est extrudée au travers d'une filière cylindrique ayant 4 mm de diamètre pour obtenir des extrudés ayant une forme cylindrique.

Après 15 heures de séchage à 120° C et 2 heures de calcination à 450° C, les extrudés ont les caractéristiques suivantes :
- diamètre des extrudés : 3,5 mm
- surface spécifique : 120 $m^2$/g
- volume poreux total : 0,35 $cm^3$/g

Exemple 2

La pâte obtenue dans l'exemple 1 est extrudé au travers d'une filière de section carrée de 20 mm de côté et comportant 169 petits carrés de 1,4 mm de côté.

Les monolithes sont ensuite séchés à 120° C pendant 15 heures puis calcinés 2 heures à 450° C.

Les caractéristiques du catalyseur obtenu sont les suivantes :
- monolithes de section carrée de 20 mm de côté

5

- surface spécifique : 110 m²/g
- volume poreux total : 0,30 cm³/g

Tests catalytiques

Le test catalytique a pour but de comparer les activités des catalyseurs des exemples 1 et 2 en oxydation directe de l'hydrogène sulfuré, en soufre et SO₂.

On introduit dans un réacteur un gaz ayant la composition suivante en volume. H₂S : 1 %
O₂ : 0,5 %
H₂O : 7 %
N₂ : 91,5 %

En fonctionnement isotherme, à une température de 200°C et pour un volume identique de réacteur rempli de catalyseur, la vitesse volumique des gaz est égale à 7200 h⁻¹ calculée dans les conditions normales de température et de pression.

Le temps de contact des gaz est de 0,5 secondes.

Les gaz de sortie sont analysés par chromatographie en phase gazeuse.

On compare l'activité des catalyseurs en mesurant le taux de transformation de l'hydrogène sulfuré et on détermine le pourcentage de SO₂ formé.

Les résultats obtenus sont consignés dans le tableau 1 suivant :

Tableau I

|  | Type de catalyseur | Taux de conversion | Formation SO₂ |
|---|---|---|---|
| Exemple 1 comparatif | extrudés de TiO₂ | 27 % | 500 PPM |
| Exemple | monolithes de TiO₂ | 57 % | < 50 PPM |

L'examen des résultats reportés dans le Tableau 1 met bien en évidence la supériorité du catalyseur de l'invention par rapport au catalyseur de l'art antérieur, non seulement pour l'élimination du gaz H₂S, mais aussi pour son activité et sa sélectivité en soufre.

**Revendications**

1 - Catalyseur pour le traitement des gaz contenant des composés soufrés en vue de l'oxydation de ces composés en composés soufrés aisément éliminables notamment en soufre élémentaire, comprenant comme composant essentiel un élément catalyseur de la réaction d'oxydation de ces composés soufrés, caractérisé en ce que ledit catalyseur a une forme monolithique.

2 - Catalyseur selon la revendication 1 caractérisé par le fait qu'il présente une structure de type alvéolaire ou en nids d'abeille permettant le passage des gaz dans les canaux ou conduits.

3 - Catalyseur selon l'une des revendications 1 et 2 caractérisé par le fait qu'il comprend des vides ou des pores d'une porosité d'environ 50 à 70 %.

4 - Catalyseur selon l'une des revendications 1 à 3 caractérisé par le fait qu'il est sous forme massique : la phase catalytiquement active étant extrudée sous forme monolithique.

5 - Catalyseur selon l'une des revendications 1 à 3 caractérisé par le fait qu'il est sous forme supportée : la phase catalytiquement active étant déposée sur un support de forme monolithique.

6 - Catalyseur selon la revendication 5 caractérisé par le fait que le support de forme monolithique est choisi dans le groupe comprenant l'alumine, la silice, l'oxyde de cérium, l'oxyde de zirconium, l'oxyde de titane.

7 - Catalyseur selon la revendication 5 caractérisé par le fait que le support de forme monolithique est un monolithe métallique ou un monolithe en céramique.

8 - Catalyseur selon l'une des revendications 1 à 7 caractérisé par le fait que l'élément catalytiquement actif est un oxyde des éléments choisis dans le groupe comprenant le titane, le cérium, le zirconium, l'aluminium, le fer, le zinc, le chrome, le molybdène, le cobalt, le nickel, le vanadium.

6

9 - Catalyseur selon l'une des revendications 1 à 8 caractérisé par le fait qu'il contient de 0,5 à 100 % en poids d'élément catalytiquement actif (exprimé en oxyde), de préférence de 60 à 99 %.

10 - Catalyseur selon l'une des revendications 1 à 9 caractérisé par le fait qu'il comprend un sulfate d'alcalino-terreux ou un sulfate d'ammonium.

11 - Catalyseur selon l'une des revendications 1 à 10 caractérisé par le fait qu'il comprend au moins un oxyde d'un métal choisi dans le groupe comprenant le cérium, le zirconium, le molybdène, le cobalt, le silicium, les terres rares trivalentes, le nickel, le fer, l'étain, l'aluminium et le titane, le chrome, le zinc, le vanadium.

12 - Catalyseur selon la revendication 1 caractérisé par le fait qu'il est constitué par un monolithe en oxyde de titane.

13 - Procédé d'oxydation en soufre de l'hydrogène sulfuré et des composés soufrés caractérisé par le fait qu'il consiste à mettre en contact un effluent gazeux contenant les composés soufrés et un gaz renfermant de l'oxygène en présence du catalyseur selon l'une des revendications 1 à 12.

14 - Procédé selon la revendication 13 caractérisé par le fait que l'effluent gazeux comprend de 0,1 à 10 % en volume d'hydrogène sulfuré, de préférence entre 0,1 et 3 %.

15 - Procédé selon l'une des revendications 13 et 14 caractérisé par le fait que la température réactionnelle est comprise entre 200°C et 550°C.

16 - Procédé selon l'une des revendications 1 à 15 caractérisé par le fait que le temps de contact est compris entre 0,5 et 2,5 secondes.

17 - Procédé selon l'une des revendications 1 à 16 caractérisé par le fait que la vitesse spatiale est supérieure à 1500 h$^{-1}$.

18 - Procédé selon l'une des revendications 1 à 17 caractérisé par le fait que la vitesse spatiale est comprise entre 2000 et 10.000 h$^{-1}$.

Office européen
des brevets

RAPPORT DE RECHERCHE
EUROPEENNE

Numéro de la demande

**EP 90 40 2761**

# DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-4 382 912   (A. MADGAVKAR)<br>* Revendications 1-16; exemple * | 1,2,5-9,<br>11,12,14,<br>15,17 | B 01 D<br>53/36<br>C 01 B 17/04 |
| | — — — | | |
| X | EP-A-0 272 979   (RHONE-POULENC)<br>* Revendications 1-19; exemple 6 * | 1,4-16 | |
| | — — — | | |
| X | PATENT ABSTRACTS OF JAPAN, vol. 9, no. 184<br>(C-294)[1907], 30 juillet 1985;<br>& JP-A-60 54 903 (MATSUSHITA DENKI SANGYO K.K.)<br>29-03-1985<br>* En entier * | 1,2,7,13,<br>14 | |
| | — — — | | |
| X | EP-A-0 244 301   (RHONE-POULENC)<br>* Revendications 1-16; exemple 9 * | 1,2,4-8,<br>11-16 | |
| | — — — | | |
| A,D | EP-A-0 060 742   (RHONE-POULENC)<br>* Revendications 1-6 * | 1,6,8,11 | |
| | — — — | | |
| A,D | EP-A-0 078 690   (MOBIL OIL)<br>* Revendications 1-10 * | 1,8,17,18 | |
| | — — — — — | | DOMAINES TECHNIQUES RECHERCHES (Int. Cl.5) |
| | | | B 01 D<br>C 01 B |

Le présent rapport de recherche a été établi pour toutes les revendications

| Lieu de la recherche | Date d'achèvement de la recherche | Examinateur |
|---|---|---|
| La Haye | 15 janvier 91 | KANOLDT W.W. |